Europäisches Patentamt

(19) European Patent Office (11) Numéro de publication : **0 029 386**

Office européen des brevets **B1**

(12) FASCICULE DE BREVET EUROPÉEN

(45) Date de publication du fascicule du brevet :
16.02.83

(51) Int. Cl.³ : **H 02 G   5/06**

(21) Numéro de dépôt : **80401605.3**

(22) Date de dépôt : **10.11.80**

(54) **Isolateur support de conducteurs pour poste blindé triphasé à haute tension et à enveloppe commune.**

(30) Priorité : **14.11.79 JP 148178/79**

(43) Date de publication de la demande :
**27.05.81 Bulletin 81/21**

(45) Mention de la délivrance du brevet :
**16.02.83 Bulletin 83/07**

(84) Etats contractants désignés :
**BE CH DE FR GB IT LI NL SE**

(56) Documents cités :
**FR A 2 346 884**
**PATENTS ABSTRACTS OF JAPAN, vol. 3, no. 127,
23 octobre 1979, page 61 E 146**

(73) Titulaire : **MERLIN GERIN**
**Rue Henri Tarze**
**F-38050 Grenoble Cedex (FR)**

(72) Inventeur : **Nagaoka, Yugo**
**Nissin Electric Co. Ltd. 47, Umezu-Takase-cho
Ukyo-ku Kyoto (JP)**
Inventeur : **Tanimura, Ken-ichi**
**Nissin Electric Co. Ltd. 47, Umezu-Takase-cho
Ukyo-ku Kyoto (JP)**

(74) Mandataire : **Kern, Paul et al**
**Merlin Gerin Sce. Brevets 20, rue Henri Tarze
F-38050 Grenoble Cedex (FR)**

EP 0 029 386 B1

# Isolateur support de conducteurs pour poste blindé triphasé à haute tension et à enveloppe commune

L'invention concerne un isolateur support d'un jeu de trois conducteurs de raccordement pour poste blindé triphasé à haute tension dont les pôles des trois phases R, S, T sont disposés dans une enveloppe étanche commune remplie de gaz isolant à rigidité diélectrique élevée, notamment de l'hexafluorure de soufre, les trois conducteurs de raccordement étant enrobés dans le corps discoïdal en matériau isolant moulé de l'isolateur support, et s'étendant selon les arêtes parallèles d'un prisme triangulaire traversant perpendiculairement ledit corps dans la direction axiale.

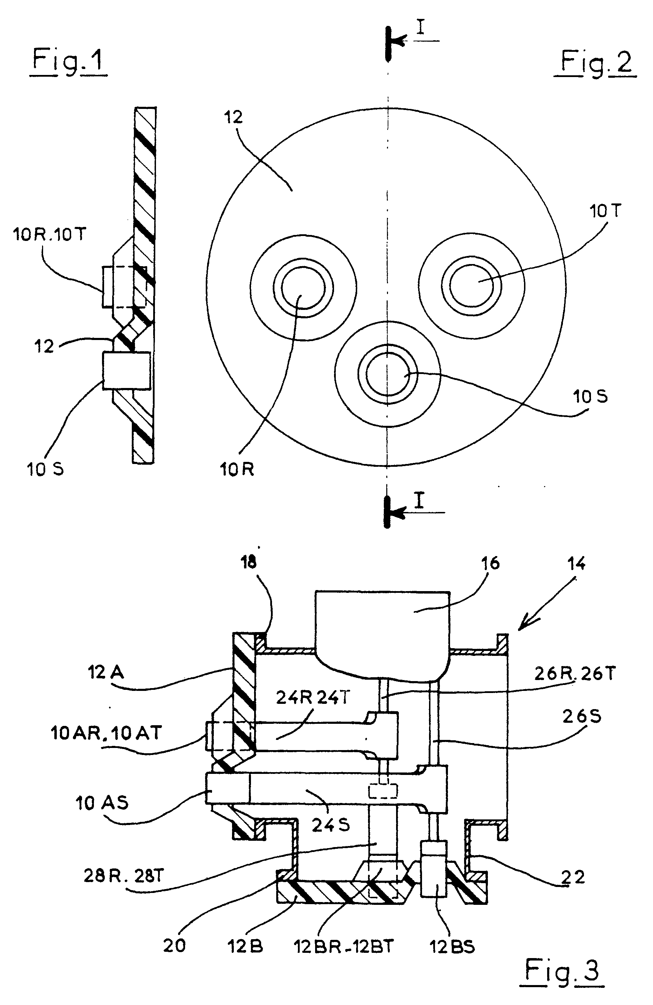

Selon un dispositif connu de l'art antérieur représenté aux figures 1 à 2, les extrémités opposées de chacun des trois conducteurs 10R, 10S, 10T, de raccordement sont agencées sensiblement dans deux plans s'étendant parallèlement au corps discoïdal de l'isolateur 12 support, et perpendiculairement aux arêtes du prisme. La figure 3 montre un tronçon 14 intermédiaire de l'enveloppe commune d'un poste blindé dans lequel un sectionneur 16 tripolaire est connecté aux conducteurs de raccordement 10AR, 10AS, 10At ; 10BR, 10BS, 10BT de deux isolateurs supports 12A ; 12B assujetties à deux brides 18, 20 orthogonales du carter 22 métallique constitutif du tronçon 14. Les deux isolateurs 12A, 12B sont identiques à l'isolateur 12, des figures 1 et 2, et on remarque qu'à la phase S est associé un conducteur de liaison 24S entre le conducteur de raccordement 10AS du premier isolateur support 12A et le conducteur 26S du sectionneur tripolaire 16. Ce conducteur 24S nécessite une longueur supérieure à celles des conducteurs de liaison 24R, 24T des phases R et T entre les conducteurs de raccordement 10AR, 10AT et les conducteurs correspondants 26R, 26T du sectionneur. La différence de longueur des conducteurs de liaison 24S et 24R, 24T correspond au décalage transversal ménagé entre le conducteur 26S de la phase S et le plan passant par les conducteurs 26R, 26T des phases R et T du sectionneur tripolaire 16. Les conducteurs de liaison 24R, 24S, 24T s'étendent dans l'alignement des conducteurs de raccordement correspondants 10AR, 10AS, 10AT et sont perpendiculaires aux conducteurs 26R, 26S, 26T du sectionneur 16.

La connexion des conducteurs de raccordement 12BR, 12BS, 12BT du deuxième isolateur support 12B aux conducteurs alignés correspondants 26R, 26S, 26T du sectionneur 16 s'effectue dans deux plans parallèles agencés perpendiculairement aux conducteurs de liaison 24R, 24S, 24T. Deux entretoises 28R, 28T conductrices sont intercalées obligatoirement entre les conducteurs de raccordement 12BR, 12BT et les conducteurs colinéaires respectifs 26R, 26T des phases R et T du sectionneur 16 pour respecter le décalage des pôles selon la direction axiale de l'isolateur support 12B associée à la bride 20.

L'invention part de la constatation qu'un poste blindé triphasé comporte un grand nombre de tronçons élémentaires juxtaposés, à phases décalées dans l'enveloppe commune pour une bonne tenue diélectrique. L'utilisation entre les tronçons de conducteurs de liaison ayant par phase des longueurs différentes, et l'adjonction d'entretoises de connexion additionnelles au voisinage des conducteurs de raccordement de chaque isolateur support augmentent considérablement le temps de raccordement et d'assemblage des phases des différents tronçons juxtaposés du poste. Le but de l'invention consiste à remédier aux inconvénients précités et à réaliser un poste blindé triphasé à raccordement rapide des éléments de pôles grâce à l'emploi dans chaque phase de conducteurs de liaison et d'isolateurs supports standards avec suppression des entretoises de connexion supplémentaires.

Le poste blindé triphasé est caractérisé par le fait que les trois conducteurs de raccordement 30R, 30S, 30T, de l'isolateur support 30 présentent chacun une longueur axiale L identique, et que l'un des conducteurs 30S associé à l'une des phases est décalé des conducteurs 30R, 30T coplanaires des deux autres phases par un intervalle prédéterminé s'étendant dans la direction axiale et dont la longueur r est fonction de l'espacement des pôles, adapté à une bonne tenue diélectrique à l'intérieur de l'enveloppe.

Selon une caractéristique d'un mode de réalisation de l'invention, ledit conducteur de raccordement 30S décalé associé à l'une des phases, est séparé radialement du plan passant par les conducteurs 30R, 30T des deux autres phases par une distance dont la longueur r correspond à celle dudit intervalle axial.

Selon une caractéristique d'un autre mode de réalisation de l'invention, des conducteurs de liaison 32R, 32S, 32T de mêmes longueurs sont connectés électriquement entre les conducteurs de raccordement 30AR, 30AS, 30AT des phases respectives de l'isolateur support 30A et les conducteurs 26R, 26S, 26T, correspondants de connexion de l'appareillage tripolaire juxtaposé, notamment un sectionneur, un jeu de barres RST ou un disjoncteur.

D'autres avantages ressortiront plus clairement de l'exposé qui va suivre de différents modes de mise en œuvre de l'invention représentés aux dessins annexés dans lesquels :

les figures 1-3 représentent un dispositif connu ;

les figures 4 et 5 sont des vues schématiques d'un isolateur support selon l'invention, représenté respectivement en coupe axiale selon la ligne IV-IV et en élévation ;

la figure 6 correspond à la vue de la fig. 3 ; relatif à la connexion d'un sectionneur tripolaire, et avec utilisation d'isolateurs supports identiques à celui des figures 4 et 5 ;

la figure 7 montre une vue en coupe d'une jonction en T d'un jeu de barres triphasées ;

la figure 8 représente en coupe la connexion d'un disjoncteur tripolaire associé à deux isolateurs supports identiques à celui des figures 4 et 5 ;

la figure 9 est une vue en coupe transversale selon la ligne IX-IX de la fig. 8 ;

les figures 10 et 11 sont des vues identiques à celles des figures 5 et 4 d'une variante de réalisation de l'isolateur support.

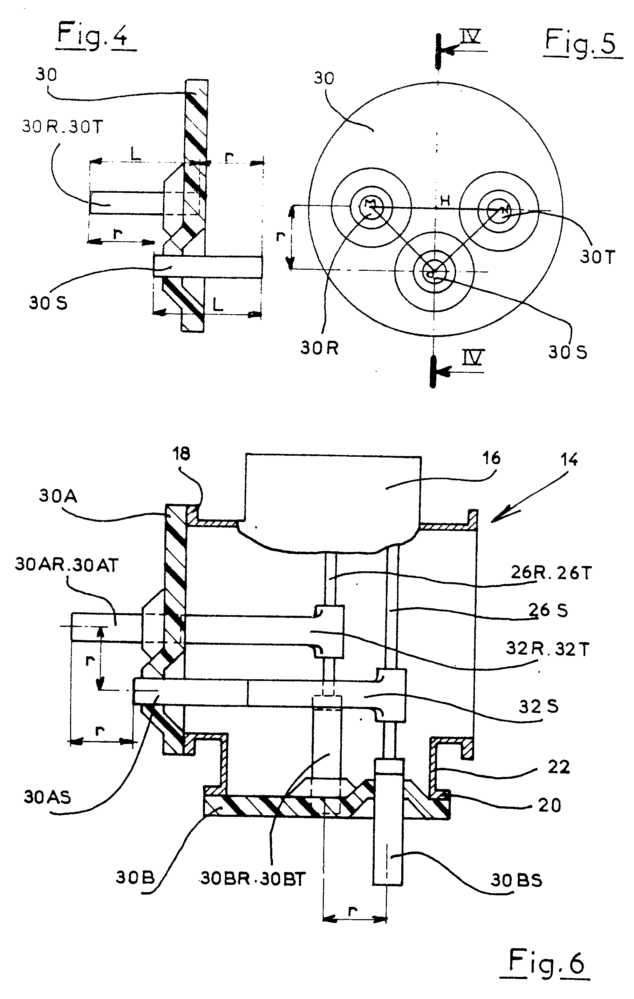

En référence aux figures 4 et 5, l'isolateur support 30 de forme discoïdale est traversé par un jeu triphasé de conducteurs internes de raccordement 30R, 30S, 30T s'étendant dans la direction axiale selon les arêtes parallèles d'un prisme oblique à section triangulaire. Les trois conducteurs 30R à 30T présentent chacun une longueur axiale L identique, mais le conducteur inférieur 30S est décalé axialement par rapport aux conducteurs coplanaires 30R, 30T d'un intervalle prédéterminé r (fig. 4). La section triangulaire du prisme oblique est formée par un triangle isocèle OMN dont le sommet O situé sur le conducteur 30S est équidistant des points M et N des conducteurs 30R et 30T (fig. 5). La hauteur OH du triangle OMN représentant la distance radiale de séparation du conducteur 30S de la phase S et du plan diamétral passant par les conducteurs 30R, 30T des phases R et T est choisie de manière à correspondre à la longueur axiale de l'intervalle r précité.

La figure 6 montre l'exemple de réalisation de la figure 3, mais avec deux isolateurs supports 30A, 30B identiques à celui des figures 4 et 5. Les mêmes repères sont utilisés par la suite pour désigner des pièces similaires. Les conducteurs de liaison 32R, 32S, 32T ménagés entre les conducteurs colinéaires de raccordement 30AR, 30AS, 30AT des phases respectives du premier isolateur 30A associée à la bride 18 et les conducteurs 26R, 26S, 26T correspondants du sectionneur 16 tripolaire présentent des longueurs identiques grâce à l'égalité dudit intervalle r et du décalage dans la direction axiale de la bride 18 du conducteur 26S de la phase S et du plan passant par les conducteurs 26R, 26T des phases R et T. Aucune entretoise supplémentaire n'est nécessaire entre les conducteurs du sectionneur 16 triphasé et les conducteurs colinéaires de raccordement 30BR, 30BS, 30BT du deuxième isolateur support 30B associé à la bride 20 orthogonale à la bride 18 du carter 22.

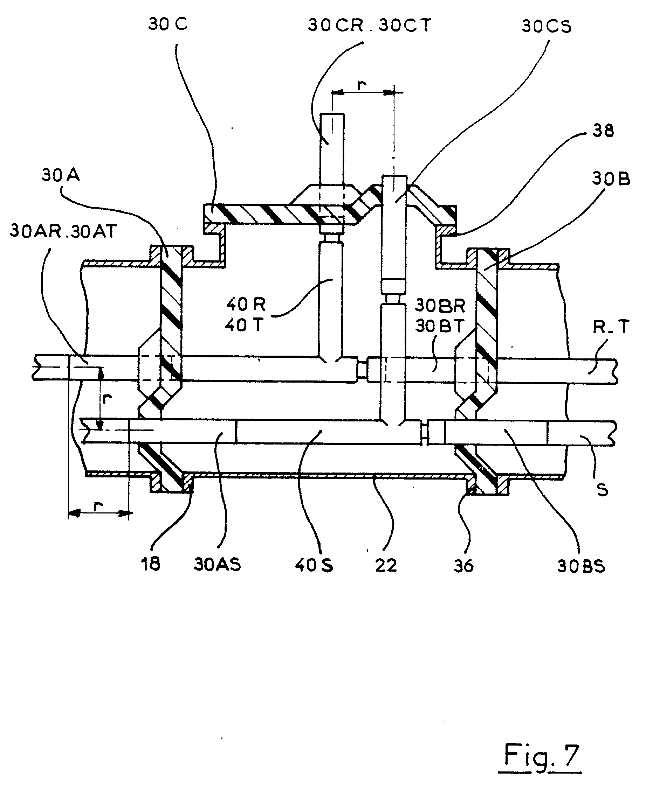

La figure 7 montre une jonction en T renversé d'un jeu triphasé de barres omnibus R, S, T logées dans l'enveloppe commune du poste. La jonction s'effectue au niveau d'un carter intermédiaire 22 comprenant trois brides 18, 36, 38 circulaires coopérant chacune avec un isolateur support 30A, 30B, 30C du type standard décrit en référence aux figures 4 et 5, l'isolateur support 30C s'étendant orthogonalement aux deux isolateurs 30A, 30B coaxiaux. La connexion par phase des conducteurs de raccordement 30AR, 30AS, 30AT ; 30BR, 30BS, 30BT ; 30CR, 30CS, 30CT associés respectivement aux isolateurs 30A, 30B, 30C, est réalisée par l'intermédiaire d'un jeu unique de trois connecteurs 40R, 40S, 40T, en forme de T, logés à l'intérieur du carter 22. Chaque connecteur 40R à 40T présente une structure identique appropriée au décalage r entre les conducteurs des différentes phases.

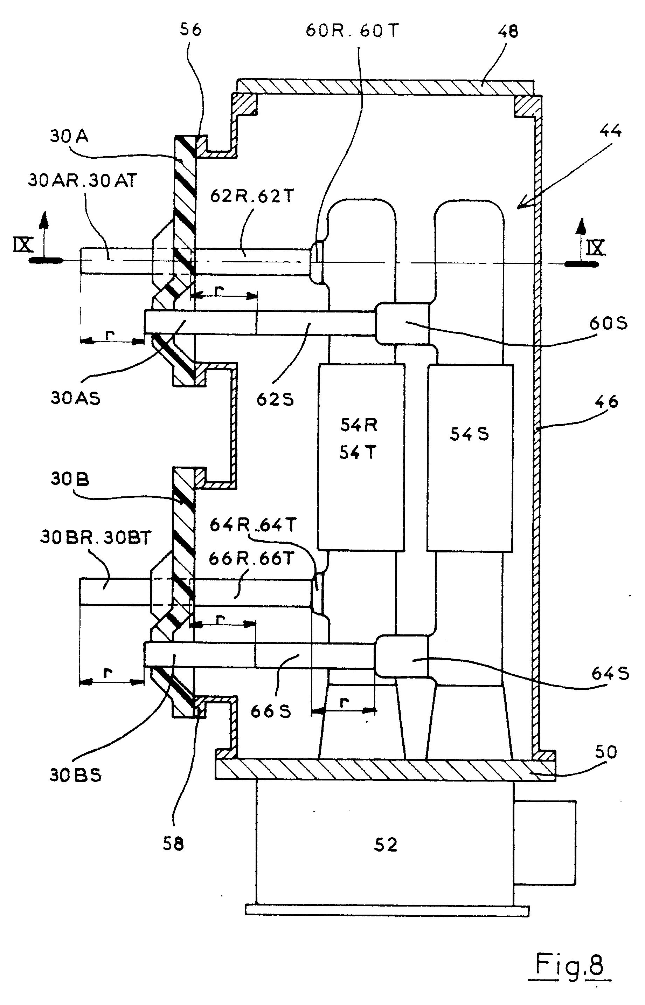

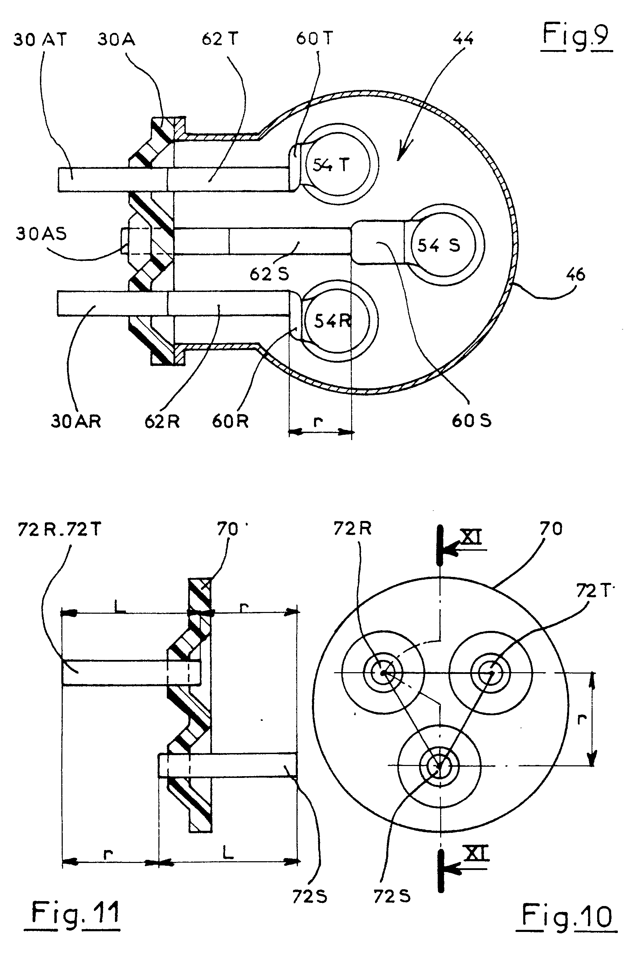

En référence aux figures 8 et 9, un disjoncteur tripolaire 44 est agencé à l'intérieur d'un tronçon 46 de l'enveloppe commune du poste blindé. Le tronçon 46 rempli de SF6 est obturé à l'amont par un couvercle 48 et à l'aval par un fond 50 prenant appui sur le mécanisme de commande 52. Les pôles 54R, 54S, 54T du disjoncteur 44 s'étendent selon les arêtes parallèles d'un prisme dans la direction verticale perpendiculaire au fond 50, tel que le décalage transversal entre les pôles est adapté à une bonne tenue diélectrique. Deux isolateurs supports 30A, 30B identiques au type standard illustré aux figures 4 et 5, sont assujettis à deux brides 56, 58 superposées de la surface latérale du tronçon 46. Les conducteurs de raccordement 30AR, 30AS, 30AT, associés à l'isolateur amont 30 A, sont respectivement connectés aux bornes d'entrée 60R, 60S, 60T des trois pôles 54R, 54S, 54T par l'intermédiaire d'un premier jeu de conducteurs de liaison 62R, 62S, 62T. Les bornes de sortie 64R, 64S, 64T des pôles sont reliées aux conducteurs de raccordement 30BR, 30BS, 30BT correspondants de l'isolateur aval 30B par un deuxième jeu de conducteurs de liaison 66R, 66S, 66T identiques à ceux du premier jeu. L'intervalle r transversal entre le plan vertical passant par les bornes d'entrée 60S et de sortie 64S de la phase S et le plan parallèle passant par les bornes d'entrée 60R, 60T et de sortie 64R, 64T des phases R et T est identique au décalage axial r entre le conducteur de raccordement 30AS, 30BS de la phase S et les conducteurs de raccordement 30AR, 30AT ; 30BR, 30BT des phases R et T de chaque isolateur support 30A, 30B.

Les figures 10 et 11 représentent une variante de réalisation des figures 4 et 5 dans laquelle un isolateur support 70 de forme discoïdale, est traversé axialement par un jeu de trois conducteurs de raccordement 72R, 72S, 72T de même longueur L, disposés selon les arêtes parallèles d'un prisme oblique dont la section est formée par un triangle équilatéral. Le barycentre de ce triangle est confondu avec l'axe de l'isolateur 70, et un décalage axial r est ménagé entre le conducteur 72S de la phase S et les conducteurs 72R, 72T des phases R et T. La hauteur du triangle équilatéral correspond sensiblement au décalage axial r.

**Revendications**

1. Isolateur support (30 ; 30A ; 30B ; 30C ; 70) d'un jeu de trois conducteurs de raccordement : (30R, 30S, 30T ; 30AR, 30AS, 30AT ; 30BR, 30BS, 30BT ; 30CR ; 30CS ; 30CT ; 72R, 72S, 72T) pour poste blindé triphasé à haute tension dont les pôles des trois phases R, S, T sont disposés dans une enveloppe (46) étanche commune, remplie de gaz isolant à rigidité diélectrique élevée, notamment de l'hexafluorure de soufre, les trois conducteurs de raccordement étant enrobés dans le corps discoïdal en matériau isolant moulé de l'isolateur support, et s'étendant selon les arêtes parallèles d'un prisme triangulaire traversant perpendiculairement ledit corps dans la direction axiale, caractérisé par le fait que les trois conducteurs de raccordement (30R, 30S, 30T ; 30AR, 30AS, 30AT ; 30BR, 30BS, 30BT ; 30CR ; 30CS, 30CT ; 72R, 72S, 72T) de l'isolateur support (30 ; 30A, 30B ; 30C ; 70) présentent chacun une longueur axiale L identique, et que l'un des conducteurs de raccordement (30S ; 30AS ; 30BS ; 30CS ; 72S) ou l'une des bornes d'entrée (60S) associé à l'une des phases est décalé des conducteurs de raccordement (30R, 30T ; 30AR, 30AT ; 30BR, 30BT ; 30CR, 30CT ; 72R, 72T) ou des bornes d'entrée (60R, 60T) coplanaires des deux autres phases par un intervalle prédéterminé s'étendant dans la direction axiale et dont la longueur r est fonction de l'espacement des pôles adapté à une bonne tenue diélectrique à l'intérieur de l'enveloppe.

2. Isolateur support pour poste blindé selon la revendication 1, caractérisé par le fait que ledit conducteur de raccordement (30S) décalé, associé à l'une des phases, est séparé radialement du plan passant par les conducteurs (30R, 30T) des deux autres phases par une distance dont la longueur r correspond à celle dudit intervalle axial.

3. Isolateur support pour poste blindé selon la revendication 1 ou 2, caractérisé par le fait que des conducteurs de liaison (32R, 32S, 32T) de mêmes longueurs sont connectés électriquement entre les conducteurs de raccordement (30AR, 30AS, 30AT) des phases respectives de l'isolateur support (30A) et les conducteurs (26R, 26S, 26T) correspondants de connexion de l'appareillage tripolaire juxtaposé, notamment un sectionneur (16), un jeu de barres RST ou un disjoncteur (44).

4. Isolateur support pour poste blindé selon la revendication 3, caractérisé par le fait que ledit intervalle axial r entre les conducteurs de raccordement (30R à 30T) correspond au décalage transversal entre le conducteur de connexion 26S de l'un des pôles de l'appareillage et le plan passant par les conducteurs de connexion (26R, 26T) des deux autres pôles.

5. Isolateur support pour poste blindé selon la revendication 4, caractérisé par le fait que la section triangulaire du prisme oblique des conducteurs de raccordement (30R à 30T) de l'isolateur support (30) est formé par un triangle isocèle dont le sommet est situé sur le conducteur de raccordement (30S) décalé des deux autres conducteurs (30R, 30T) par ledit intervalle axial.

6. Isolateur support pour poste blindé selon la revendication 4, caractérisé par le fait que la section triangulaire du prisme oblique des conducteurs de raccordement (72R, 72S, 72T) est conformée par un triangle équilatéral dont le barycentre est confondu avec l'axe de l'isolateur support (70) associé et dont la hauteur correspond sensiblement audit intervalle axial r.

## Claims

1. Support insulator (30 ; 30A ; 30B ; 30C ; 70) of a system of three connecting conductors (30R, 30S, 30T ; 30AR, 30AS, 30AT ; 30BR, 30BS, 30BT ; 30CR, 30CS, 30CT ; 72R, 72S, 72T) for high tension three-phase metal-clad substation, of which the poles of the three phases R, S, T are located in a common tight housing (46), filled with insulating gas having a high dielectric strength, in particular sulfur hexafluoride, the three connecting conductors being coated in the disk-shaped body of moulded insulating material of the support insulator, and extending according to the parallel edges of a triangular prism going perpendicularly through said body in axial direction, characterized in that the three connecting conductors (30R, 30S, 30T ; 30AR, 30AS, 30AT ; 30BR, 30BS, 30BT ; 30CR, 30CS, 30CT ; 72R, 72S, 72T) of the support insulator (30 ; 30A ; 30B ; 30C ; 70) show each one an identical axial length L, and that one of the connecting conductors (30S ; 30AS ; 30BS ; 30CS ; 72S) or one of the entrance bushings (60S) associated with one of the phases is shifted from the connecting conductors (30R, 30T ; 30AR, 30AT ; 30BR, 30BT ; 30CR, 30CT ; 72R, 72T) or from the entrance bushings (60R, 60T) coplanar with the other two phases, by a predetermined gap extending in axial direction and the length r of which is function of the poles spacing adapted to a good insulation level inside the housing.

2. Support insulator for metal-clad substation according to claim 1, characterized in that said shifted connecting conductor (30S), associated with one of the phases, is radially separated from the plane going through the conductors (30R, 30T) of the other two phases by a distance, the length r of which corresponds to the one of said axial gap.

3. Support insulator for metal-clad substation according to claims 1 or 2, characterized in that connection conductors (32R, 32S, 32T) with same lengths are electrically connected between the connecting conductors (30AR, 30AS, 30AT) of respective phases of the support insulator (30A) and the corresponding connection conductors (26R, 26S, 26T) of the juxtaposed triple-pole apparatus, in particular an isolating switch (16), a bar system RST or a circuit breaker (44).

4. Support insulator for metal-clad substation according to claim 3, characterized in that said axial gap r between the connecting conductors (30R to 30T) corresponds to the cross-shift between the connection conductor 26S of one of the apparatus poles and the plane going through the connection conductors (26R, 26T) of the other two poles.

5. Support insulator for metal-clad substation according to claim 4, characterized in that the triangular cross-section of the oblique prism of the connecting conductors (30R to 30T) of the support insulator (30) is formed by an isosceles triangle, the vertex of which is located on the connecting conductor (30S) shifted from the other two conductors (30R, 30T) by said axial gap.

6. Support insulator for metal-clad substation according to claim 4, characterized in that the triangular cross-section of the oblique prism of the connecting conductors (72R, 72S, 72T) is formed by an equilateral triangle, the barycenter of which is merged with the axis of the associated support insulator (70) and the height of which almost corresponds to said axial gap r.

## Ansprüche

1. Tragisolator (30 ; 30A ; 30B ; 30C ; 70) für ein Spiel von drei Anschlussleitern (30R, 30S, 30T ; 30AR, 30AS, 30AT ; 30BR, 30BS, 30BT ; 30CR, 30CS, 30CT ; 72R, 72S, 72T) einer dreiphasigen metallgekapselten Hochspannungsschaltanlage, wovon die Pole der drei Phasen R, S, T in einem gemeinsamen, gasdichten Gehäuse (46), gefüllt mit einem Isolationsgas hoher dielektrischer Festigkeit, insbesondere Schwefelhexafluorid, aufgestellt, sind, wobei die drei Anschlussleiter in dem scheibenförmigen Körper des aus Isoliermaterial gegossenen Tragisolators eingebettet sind und sich längs der parallelen Seiten eines dreieckigen Prismas, den Körper in axialer Richtung senkrecht durchquerend, erstrecken, dadurch gekennzeichnet, dass die drei Anschlussleiter (30R, 30S, 30T ; 30AR, 30AS, 30AT ; 30BR, 30BS, 30BT ; 30CR, 30CS, 30CT ; 72R, 72S, 72T) des Tragisolators (30 ; 30A ; 30B ; 30C ; 70) je die gleiche axiale Länge L haben und dass einer der Anschlussleiter (30S ; 30AS ; 30BS ; 30CS ; 72S) oder eine der Eingangsklemmen (60S) von einer der Phasen gegenüber den Anschlussleitern (30R, 30T ; 30AR, 30AT ; 30BR, 30BT ; 30CR, 30CT ; 72R, 72T) oder den koplanaren Eingangsklemmen (60R, 60T) der beiden anderen Phasen in axialer Richtung versetzt ist mit einem bestimmten Abstand, dessen Länge r von dem einer guten dielektrischen Festigkeit im Innern des Gehäuses entsprechenden Abstand abhängig ist.

2. Tragisolator für eine gekapselte Schaltanlage nach Anspruch 1, dadurch gekennzeichnet, dass der genannte versetzte, zu einer der Phasen gehörende Anschlussleiter (30S) radial getrennt ist von der durch die Leiter (30R, 30T) der beiden anderen Phasen gehenden Ebene in einem Abstand r, der dem genannten axialen Abstand entspricht.

3. Tragisolator für eine gekapselte Schaltanlage nach Anspruch 1 oder 2, dadurch gekennzeichnet, dass Verbindungsleiter (32R, 32S, 32T) von gleicher Länge elektrisch zwischen den Anschlussleitern (30AR, 30AS, 30AT) der verschiedenen Phasen des Tragisolators (30A) und den entsprechenden Anschlussleitern (26R, 26S, 26T) des dreipoligen Schaltapparates, nämlich eines Trennschalters (16) eines Schienenspieles RST oder eines Leistungsschalters (44) geschaltet sind.

4. Tragisolator für eine gekapselte Schaltanlage nach Anspruch 3, dadurch gekennzeichnet, dass der genannte axiale Abstand r, zwischen den Anschlussleitern (30R-30T), der seitlichen Versetzung zwischen dem Verbindungsleiter (26S) eines Poles des Schaltapparates und der durch die Verbindungsleiter (26R, 26T) der beiden anderen Pole laufenden Ebene entspricht.

5. Tragisolator für eine gekapselte Schaltanlage nach Anspruch 4, dadurch gekennzeichnet, dass der dreieckige Schnitt des schiefen Prismas der Anschlussleiter (30R-30T) des Tragisolators (30) durch ein gleichschenkliges Dreieck gebildet ist, von dem die Spitze auf den gegenüber der beiden anderen Leiter (30R, 30T) mit dem genannten axialen Abstand versetzten Anschlussleiter (30S) liegt.

6. Tragisolator für eine gekapselte Schaltanlage nach Anspruch 4, dadurch gekennzeichnet, dass der dreieckige Schnitt des schiefen Prismas der Anschlussleiter (72R, 72S, 72T) durch ein gleichseitiges Dreieck gebildet ist, von dem das Zentrum auf der Achse des entsprechenden Tragisolators (70) liegt, und von dem die Höhe dem genannten axialen Abstand r ungefähr entspricht.

Fig.1

Fig.2

10R.10T

12

10 S

12

I

10 T

10 S

10 R

I

18

16

14

12 A

24R 24T

26R. 26T

10AR, 10AT

26S

10 AS

24S

28R. 28T

20    12B    12BR·12BT    12BS    22

Fig.3

Fig.4

30

30R.30T

L

r

r

30S

L

Fig.5

IV

30

r

H

M

N

30T

30R

30S

IV

18

30A

16

14

30AR.30AT

26R.26T

26S

32R.32T

32S

r

r

22

30AS

20

30B    30BR.30BT

30BS

r

Fig.6

2

Fig. 7

3

Fig.8

Fig.9

30 AT   30 A   62 T   60 T   44

54 T

30AS

54 S

62 S

46

30 AR   62 R   60 R   r   60 S

54R

72 R.72 T   70

L   r

72R   XI   70

72T

r

Fig.11

72S   72 S   XI

Fig.10